# EUROPEAN PATENT APPLICATION

(11) **EP 2 716 855 A1**
(43) Date of publication of application: **09.04.2014**
(21) Application number: 12781698.1
(22) Date of filing: 10.05.2012
(51) Int. Cl.: E06B 9/24, E06B 3/66, H01L 31/04, H01M 14/00

(54) **GLASS SHEET FOR WINDOW**

(30) Priority: 10.05.2011 JP 2011105710; 06.06.2011 JP 2011126726; 02.11.2011 JP 2011241704
(71) Applicant: International Frontier Technology Laboratory Inc., Tokyo 105-0001 (JP)
(72) Inventor: KOMATSU Nobuaki, Tokyo 105-0001 (JP); ITO Tomoko, Tokyo 105-0001 (JP); SHIRAI Katsuhiko, Tokyo 105-0001 (JP); NANJO Shin-ichiro, Tokyo 105-0001 (JP)
(74) Representative: Pfenning, Meinig & Partner GbR
(86) International application number: PCT/JP2012/061986
(87) International publication number: WO 2012/153803

(57) **Abstract**

Two glass plates, each having a transparent conductive layer formed thereon, are disposed so that the transparent conductive layers face each other, one of the glass plates serves as a light-incident-side electrode and has a titanium dioxide layer disposed thereon, the other glass plate has a conductive layer formed thereon and serves as a counter electrode. Silicon dioxide particles are applied on the counter electrode and calcinated, and a colorless transparent electrolyte is filled between the light-incident-side electrode and the counter electrode. When a titanium dioxide layer is used, a transparent glass plate for windows is obtained, while a ground glass plate is obtained when a titanium dioxide porous sintered material is used.
The silicon dioxide particles are treated with halogen acid such as hydrofluoric and then finely pulverized desirably to the diameter as small as 500 nm or less.

## Description

### Technical Field

The present invention relates to glass plates for windows.

### Background Art

The majority of the glass plates used for building windows are simple glass with a lighting function. Aside from such glass plates, there have been practical applications of functional glass, including, for example, double glazing filled with gas to provide a heat insulating function, laminated glass with a laminated resin layer for improved resistance, light blocking glass with a metallic thin film formed on the surface to block ultraviolet rays and infrared rays, and shield glass provided with a grid-like metal film to block electromagnetic waves.

The light blocking glass is provided with a thin film of the thickness one-fourth the wavelength of the light to be blocked, and the light transmitting is restrained by the interference of the reflected light at the both interfaces of the thin film.

The thickness of the thin film limits the wavelength of the transmitted light restrained by the interference effect of the thin film.

On the other hand, there has been development of solar cells to provide a solution to the energy problems, and solar cells that use semiconductors such as silicon are now available for practical applications. Semiconductor solar cells have high generation efficiency, but are expensive because of using the highly purified materials.

There have been attempts to form solar cells by making use of window glass used for the large exterior of buildings, particularly high-rise buildings. However, no solar cell is available that can be used as a glass plate for windows.

A solar cell that takes advantage of the Honda-Fujishima effect with the use of titanium dioxide (TiO₂) is available as a relatively low cost solar cell.

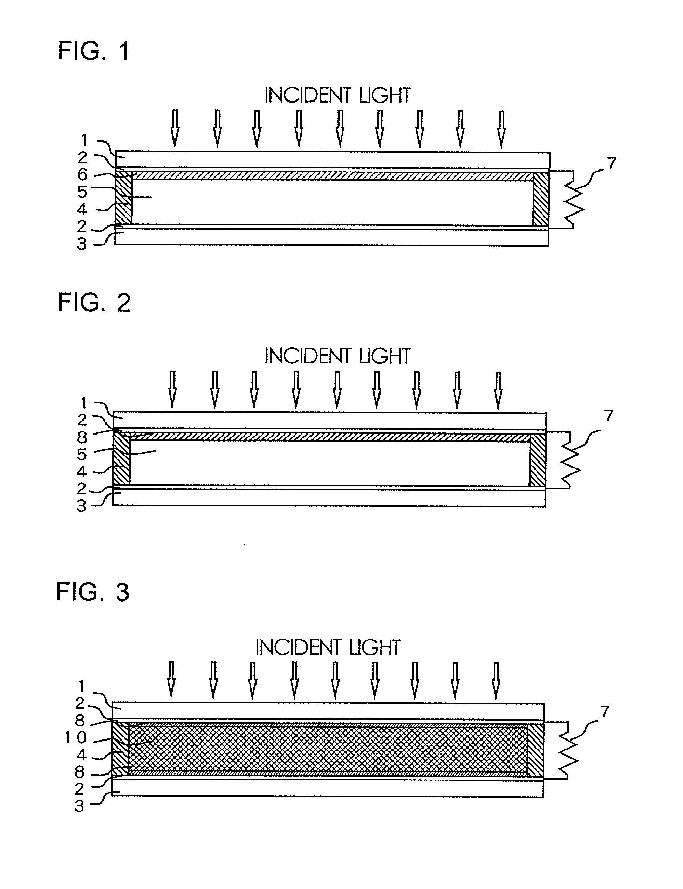

Referring to Fig. 1, a basic configuration of the titanium dioxide solar cell is described below.

As illustrated in the figure, the titanium dioxide solar cell includes glass substrates 1 and 3, and an FTO transparent conductive layer 2 formed on one side of each glass substrate. Light enters on the side of the glass substrate 1. The numeral 6 represents a porous titanium dioxide sintered material 6. An electrolytic solution 5 is typically an iodine-based electrolyte prepared by dissolving iodine in a potassium iodide aqueous solution. Numeral 4 represents a sealant; and 7 a load such as a resistor.

When incident light needs not to be transmitted, metal plates such as stainless steel plates may be used in place of the glass substrates and the FTO transparent conductive layers.

The light which the titanium dioxide can utilize in electric generation is only ultraviolet light with the wavelengths of 380 nm or less. Because the ultraviolet light of these wavelengths is only 4% of sunlight, the efficiency of using sunlight, the most abundant light source, is merely 4% at the maximum, and at most 1% in practice. The efficiency of using the sunlight is very low indeed.

For removing the drawback of titanium dioxide that the usable wavelength range of light is narrow, there has been known a dye sensitized solar cell (DSSC) which has sintered porous titanium dioxide having a ruthenium complex dye adsorbed thereon, and which thereby can use light in the visible light region that is longer in wavelength than the ultraviolet light.

A basic configuration of the dye sensitized solar cell is described below with reference to Fig. 2.

As illustrated in the figure, the dye sensitized solar cell includes glass substrates 1 and 3, and an FTO transparent conductive layer 2 formed on one side of each glass substrate. Light enters on the side of the glass substrate 1. The numeral 9 represents a porous titanium dioxide sintered material that has adsorbed a ruthenium complex dye. An electrolytic solution 5 is typically an iodine-based electrolyte prepared by dissolving iodine in a potassium iodide aqueous solution. Numeral 4 represents a sealant; 7 a load such as a resistor.

The dye sensitized solar cell uses sunlight at the theoretical efficiency of 30%. The actual efficiency is at most 10%.

When incident light needs not to be transmitted, metal plates such as stainless steel plates may be used in place of the glass substrates and the FTO transparent conductive layers.

Aside from the titanium dioxide having a photocatalytic function, fused quartz particles treated with halogen acid are also used as material similarly having the photocatalytic function, as described in JP-A-2004-290748 (Japanese Patent No. 4214221), and JP-A-2004-290747 (Japanese Patent No. 4247780).

As a material similarly having the photocatalytic action, synthetic quartz particles treated with hydrofluoric acid is described in International Patent Application Publication No. WO2005/089941.

The synthetic quartz photocatalyst functions as a photocatalyst over a 200 to 800 nm wavelength region wider than that of photocatalyst that use the fused quartz described in JP-A-2004-290748 and JP-A-2004-290747 as a raw material.

The present inventors found that silicon dioxide as represented such synthetic quarts is usable in the solar cell, and such solar cells are described in WO2011/049156.

Silicon dioxide does not need to be crystalline synthetic quarts, and also serves as the solar cell material in the form of amorphous glass particles such as fused quartz, non-alkali glass, borosilicate glass, and soda-lime glass when treated with halogen acid.

A basic configuration of the silicon dioxide solar cell is described below with reference to Fig. 3.

As illustrated in the figure, the silicon dioxide solar cell includes glass substrates 1 and 3, and an FTO transparent conductive layer 2 formed on one side of the glass substrates. Light enters on the side of the glass substrate 1. The numeral 10 represents a granular material formed by pulverizing a silicon dioxide calcinated material. The electrolytic solution coexists with the silicon dioxide granular material, and is typically an iodine-based electrolyte prepared by dissolving iodine in a potassium iodide aqueous solution.

An n-type semiconductor layer such as zinc oxide (ZnO) and titanium oxide (TiO₂) is formed on the FTO layer 2 formed on the glass substrate 1 on the light incident side.

A platinum layer 8 is formed on the FTO layer 2 formed on the glass substrate 3 opposite the light incident side.

The numeral 4 represents a sealant; and 7 a load such as a resistor.

When incident light needs not to be transmitted, metal plates such as stainless steel plates may be used in place of the glass substrates and the FTO transparent conductive layers.

The organic electrolyte is prepared by adding LiI (0.1 mol) , I₂ (0.05 mol), 4-tert-butylpyridine (0.5 mol), and tetrabutylammonium iodide (0.5 mol) to an acetonitrile solvent.

### Prior Art References

Document 1: JP-A-2004-290748
Document 2: JP-A-2004-290747
Document 3: WO2005/089941
Document 4: WO2011/049156

### Disclosure of the Invention

### Object of The Invention

The dye sensitized solar cell uses a ruthenium complex dye, and is colored. The dye sensitized solar cell is thus not suited for window glass applications even when configured by being sealed between colorless transparent glass plates.

The solar cell using the colorless synthetic quarts is also unsuited for window glass applications by itself, because the iodine-based electrolyte sealed in the solar cell inevitably has color.

An object of the invention concerning the present application is to provide a colorless or pale colored window glass plate that has a solar cell function, and that can be used for window glass in constructions such as buildings.

### Means

The invention concerning the present application provides a solar cell that uses titanium dioxide and an iodine-based electrolyte in combination with crystalline synthetic quartz particles treated with halogen acid, or amorphous glass particles such as fused quartz, non-alkali glass, borosilicate glass, and soda-lime glass treated with halogen acid.

The present inventors conducted intensive studies, and found that a solar cell usable as window glass can be formed with the use of a suitable electrolyte.

The present application provides a glass plate for windows constructed from a solar cell.

Specifically, a glass plate for window is provided that includes two glass plates each having a transparent conductive layer formed thereon and disposed face to face each other on the transparent conductive layer sides, a titanium dioxide layer disposed as a light-incident-side electrode on one of the glass plates, silicon dioxide particles disposed on a platinum electrode formed on the other glass plate, and a colorless transparent electrolytic solution sealed between the two glass plates.

After intensive studies, the present inventors found that a solar cell usable as window glass can be formed by adopting an appropriately selected electrolyte.

The present application provides a glass plate for windows constructed from a solar cell.

Specifically, a glass plate for window is provided that includes two glass plates each having a transparent conductive layer formed thereon and disposed face to face each other on the transparent conductive layer sides; a titanium dioxide layer disposed as a light-incident-side electrode on one of the glass plates; silicon dioxide particles disposed on a platinum electrode formed on the other glass plate; and a colorless transparent electrolytic solution sealed between the two glass plates.

Other features of the invention concerning the present application are as follows.
(1) A glass plate for windows that includes two glass substrates each having a transparent conductive layer formed thereon and disposed face to face each other on the transparent conductive layer sides; a photovoltaic material disposed on at least one of the glass substrates; and an electrolyte filled between the two glass substrates, wherein the transparent conductive layers are connected to an external load.
(2) The glass plate for windows of (1), wherein the photovoltaic material disposed on one of the glass substrates is titanium dioxide.
(3) The glass plate for windows of (1), wherein the photovoltaic material disposed on one of the glass substrates is silicon dioxide.
(4) The glass plate for windows, wherein the photovoltaic material disposed on one of the glass substrates is titanium dioxide, and the photovoltaic material disposed on the other glass substrate is silicon dioxide.
(5) The glass plate for windows, wherein a separating membrane permeable only for the electrolyte is disposed between the silicon dioxide photovoltaic material and the titanium dioxide photovoltaic material.

### Brief Description of the Drawings

Fig. 1 shows a schematic diagram of a conventional titanium dioxide solar cell.
Fig. 2 shows a schematic diagram showing a configuration of a conventional dye sensitized titanium dioxide solar cell.
Fig. 3 shows a schematic diagram showing a configuration of a silicon dioxide solar cell of the prior art.
Fig. 4 shows a schematic diagram showing a configuration of a titanium dioxide glass plate for windows of Embodiment 1.
Fig. 5 shows a schematic diagram showing a configuration of a dye sensitized titanium dioxide glass plate for windows of Embodiment 2.
Fig. 6 shows a schematic diagram showing a configuration of a silicon dioxide glass plate for windows of Embodiment 3.
Fig. 7 shows a schematic diagram showing a configuration of a titanium dioxide/silicon dioxide glass plate for windows of Embodiment 4.
Fig. 8 shows a schematic diagram showing a configuration of a titanium dioxide/silicon dioxide glass plate for windows of Embodiment 5 as an improvement over the titanium dioxide/silicon dioxide glass plate for windows of Embodiment 4.

Embodiments of glass plates for windows are described below with reference to the accompanying drawings.

### Embodiment 1

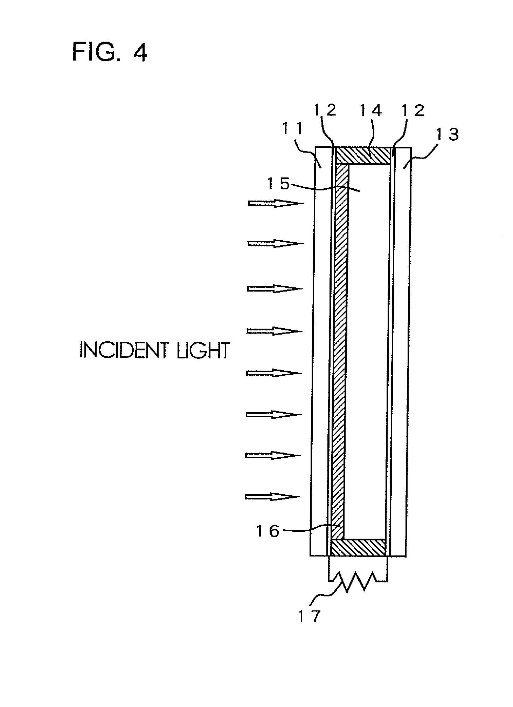

A glass plate for windows of Embodiment 1 is described below with reference to Fig. 4.

The glass plate for window of Embodiment 1 makes use of the conventional titanium dioxide solar cell of Fig. 1 for a glass plate for windows.

In Fig. 4, numeral 11 represents a glass substrate comprising a general-purpose glass plate, forming a transparent conductive layer 12, such as an FTO on one side of the glass substrate 11, which is the light incident side.

Numeral 14 represents a glass substrate comprising the similar general-purpose glass plate used for the glass substrate 11, forming a transparent conductive layer 12, such as an FTO on one side of the glass substrate 14, which is the light outgoing side.

The glass substrates 11 and 14 are disposed face to face each other on the transparent conductive layer 12 sides.

A titanium dioxide layer is disposed on the transparent conductive layer 12 of the light-incident-side glass substrate 11, and a transparent electrolyte 15 is filled between the two glass substrates. The output is made from the two transparent conductive layers.

The titanium dioxide layer 16 may be a titanium dioxide layer formed by using means such as sputtering, chemical vapor deposition (CVD), physical vapor deposition (PVD), sol-gel method, plating, electropolymerization, and molecular precursor method, or may be a titanium dioxide porous sintered material solidified by using means such as sintering.

In case of using the molecular precursor method, it is desirable to separately add titanium dioxide particles to improve function.

An iodine-based electrolyte prepared by dissolving iodine in a potassium iodide aqueous solution is most conveniently used for the transparent electrolyte 15. However, because this electrolyte is transparent but colored, it is not suited for window glass.

At present, an electrolyte of the following composition is useful as the transparent electrolyte 15.
1-ethyl-3-methylimidazolium iodide: 0.4 M
Tetrabutylammonium iodide: 0.4 M
4-t-butylpyridine: 0.2 M
Guanidium isothiocyanate: 0.1 M

These are prepared as a propylene carbonate solution.

The above electrolytic solution is almost colorless and transparent in the visible light region when the concentration of the I₂, Br₂, or other halogen molecules is 0.0004 mol/l or less.

Other colorless and transparent materials such as acetic acid and citric acid are also usable as colorless transparent electrolytic solutions.

The glass plate for windows and an FTO glass plate forming the FTO thereon were compared for the percentage blocking of short wavelength light. The glass plate for windows of Embodiment 1 using titanium dioxide and the transparent electrolyte blocked nearly 100% of the light in the wavelength region of 470 nm or less. On the other hand, the FTO glass plate blocked nearly 100% of the light in the wavelength region of 289 nm or less, but let 65% or more of the light in the 289 nm to 470 nm wavelength region pass.

As can be understood from these results, the glass plate for windows of Embodiment 1 has a sufficiently high blocking effect for short wavelength light of 470 nm or less.

### Embodiment 2

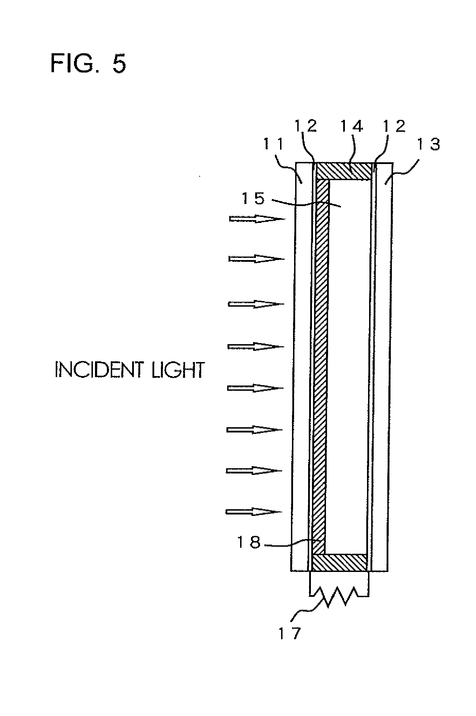

A glass plate for windows of Embodiment 2 is described below with reference to Fig. 5.

The glass plate for windows of Embodiment 2 makes use of the conventional dye sensitized titanium dioxide solar cell of Fig. 2 for a glass plate for windows.

The glass plate for windows of Embodiment 2 is the integral unit of the glass plate for windows of Embodiment 1 using titanium dioxide and the glass plate of Embodiment 3 using silicon dioxide, with the electrolyte contained as a common element. The ultraviolet light causing the titanium dioxide electric generation passes through the glass plate less than the visible and infrared light passing which the silicon dioxide blocks and causes electric generation. The titanium dioxide is thus disposed on the light-incident-side glass substrate.

The glass plate for windows of Embodiment 2 only differs from the glass plate for windows of Embodiment 1 in that the glass plate for windows of Embodiment 2 uses a dye such as a ruthenium complex dye adsorbed to the sintered porous titanium dioxide, whereas the glass plate for windows of Embodiment 1 uses the titanium dioxide layer or the titanium dioxide porous sintered material as the titanium dioxide layer. This being the only difference, further explanations are omitted here.

When the transmitted light may be colored such as in ornamental applications, a glass plate for windows of the dye sensitized solar cell configuration that generates electricity by visible light is also useful.

The glass plate for windows of Embodiment 2 is dye-sensitized, and can generate electricity utilizing the light of not only the ultraviolet region but the visible region, making it possible to block light of not only the ultraviolet region but the visible region.

### Embodiment 3

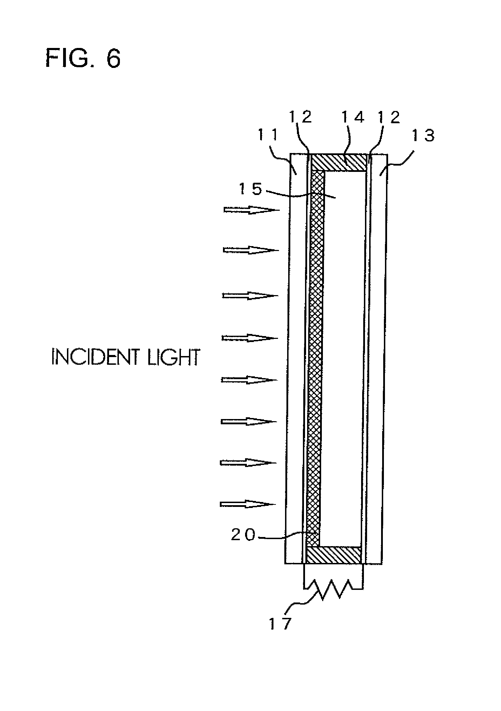

A glass plate for windows of Embodiment 3 is described below with reference to Fig. 6.

The glass plate for windows of Embodiment 3 makes use of the conventional silicon dioxide solar cell of Fig. 3 for a glass plate for windows.

In Fig. 6, numeral 11 represents a glass substrate comprising a general-purpose glass plate forming a transparent conductive layer 12, such as an FTO on one side of the glass substrate 11, which is the light incident side. Numeral 14 represents a glass substrate comprising the similar general-purpose glass plate used for the glass substrate 11, forming a transparent conductive layer 12, such as an FTO on one side of the glass substrate 14, which is the light outgoing side. The glass substrates 11 and 14 are disposed face to face each other on the transparent conductive layer 12 sides.

A silicon dioxide particles sintered material is disposed on the transparent conductive layer 12 of the light-incident-side glass substrate 11.

The silicon dioxide particles are synthetic quartz particles obtained by pulverizing crystalline synthetic quartz particles or amorphous glass particles to the particle diameter of 0.2 mm or less, desirably 500 nm or less after halogen acid treatment. The silicon dioxide particles sintered material is applied onto a layer of platinum or the like on the transparent conductive layer 12 after being mixed with ethanol, and dried.

Silicon dioxide crystalline synthetic quartz, or amorphous glass particles of silicon dioxide such as quartz glass, non-alkali glass, borosilicate glass and soda-lime may be used as the silicon dioxide particles. After being coarsely pulverized, the silicon dioxide particles are immersed in a hydrofluoric acid aqueous solution, and the synthetic quartz particles or glass particles are water washed, dried, and finely pulverized. Other than the hydrofluoric acid, hydrochloric acid may be used as halogen acid. It is, however, preferable to use hydrofluoric acid.

A transparent electrolyte 15 is filled between the two glass substrates 11 and 13. Numeral 14 represents a sealant 14; and 17 an external load.

An iodine-based electrolyte prepared by dissolving iodine in a potassium iodide aqueous solution is most conveniently used for the transparent electrolyte 15. However, because this electrolyte is transparent but colored, it is not suited for window glass.

At present, an electrolyte of the following composition is useful as the transparent electrolyte 15, as in the glass plate for windows of Embodiment 1.
1-Ethyl-3-methylimidazolium iodide: 0.4 M
Tetrabutylammonium iodide: 0.4 M
4-t-butylpyridine: 0.2 M
Guanidium isothiocyanate: 0.1 M

These are prepared as a propylene carbonate solution.

The above electrolytic solution is almost colorless and transparent in the visible light region when the concentration of the I₂, Br₂ , or other halogen molecules is 0.0004 mol/l or less.

Other colorless and transparent materials such as acetic acid and citric acid are also usable as transparent electrolytic solutions.

The glass plate for windows and FTO glass were compared for the percentage blocking of short wavelength light. The glass plate for windows of Embodiment 1 using titanium dioxide and the transparent electrolyte blocked nearly 100% of the light in the wavelength region of 470 nm or less. On the other hand, the FTO glass blocked nearly 100% of the light in the wavelength region of 289 nm or less, but let 65% or more of the light in the 289 nm to 470 nm wavelength region pass.

As can be understood from these results, the glass plate for windows of Embodiment 3 has a sufficiently high blocking effect for short wavelength light of 470 nm or less.

This type of glass plate for windows blocks 80% to 85% of infrared light of 800 nm and higher wavelengths and causes electric generation.

A solar cell characteristics measurement was performed by irradiating the glass plate for windows of Embodiment 3 with light of 1 kw/m² which is a solar constant over a 1 cm × 1 cm area using a solar simulator. The short-circuit current was 341.7 µA, and the open-circuit voltage was 500 mV.

The short-circuit current of 1799 mA, and open-circuit voltage of 570 mV were obtained when the glass plate for windows was irradiated over a 2 cm × 2 cm area. Contrary to conventional solar cells, the glass plate for windows showed greater photo-generation ability over a larger area.

In case of the synthetic quartz particles having the particle diameter of 0.2 mm or less, the short-circuit current of 85 µ A, and open-circuit voltage of 470 mV were obtained over a 1 cm × 1 cm area.

### Embodiment 4

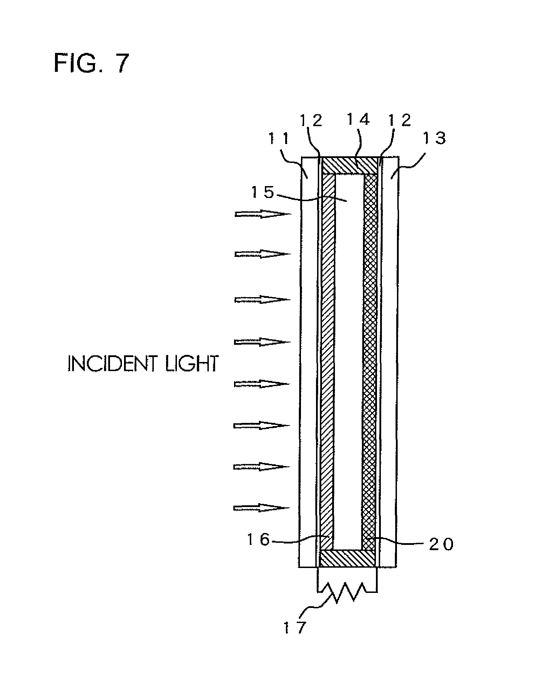

A glass plate for windows of Embodiment 4 is described below with reference to Fig. 7.

The glass plate for windows of Embodiment 4 is the integral unit of the glass plate for windows of Embodiment 1 using titanium dioxide, and the glass plate of Embodiment 3 using silicon dioxide, with the electrolyte contained as a common element. The ultraviolet light causing the titanium dioxide electric generation passes through the glass plate less than the visible and infrared light passing which the silicon dioxide blocks and causes electric generation. The titanium dioxide is thus disposed on the light-incident-side glass substrate.

In Fig. 7, numeral 11 represents a glass substrate comprising a general-purpose glass plate, forming a transparent conductive layer 12, such as an FTO on one side of the glass substrate 11, which is the light incident side. Numeral 14 represents a glass substrate comprising the similar general-purpose glass plate used for the glass substrate 11, and a transparent conductive layer 12, such as an FTO forming on one side of the glass substrate 14, which is the light outgoing side. The glass substrates 11 and 14 are disposed face to face each other on the transparent conductive layer 12 sides.

A titanium dioxide layer is disposed on the transparent conductive layer 12 of the light-incident-side glass substrate 11. A silicon dioxide particles sintered material 20 is disposed on the transparent conductive layer 12 of the light-incident-side glass substrate 13.

A transparent electrolyte 15 is filled between the two glass substrates 11 and 13. Numeral 14 represents a sealant; and numeral 17 an external load which is connected to the transparent conductive layers 12.

The titanium dioxide layer 16 may be a titanium dioxide layer formed by using means such as sputtering, chemical vapor deposition (CVD), physical vapor deposition (PVD), sol-gel method, plating, electropolymerization, and molecular precursor method, or may be a titanium dioxide porous sintered material solidified by using means such as sintering.

In case of using the molecular precursor method, it is desirable to separately add titanium dioxide particles to improve function.

Other than the titanium dioxide, materials such as CuO, MgO, ZnO, SrTiO₃, carbon nitride, and graphene may be used on the light incident side.

The particles of the silicon dioxide fired body are synthetic quartz particles pulverized to a particle diameter of 0.2 mm or less, desirably 500 nm or less, and are coated over a layer of platinum or the like on the transparent conductive layer 12 after being mixed with ethanol, and dried.

Silicon dioxide crystalline synthetic quartz, or amorphous glass particles of silicon dioxide such as quartz glass, non-alkali glass, borosilicate glass and soda-lime may be used as the silicon dioxide particles. After being coarsely pulverized, the silicon dioxide particles are immersed in a hydrofluoric acid aqueous solution, and the synthetic quartz particles or glass particles are water washed, dried, and finely pulverized. Other than the hydrofluoric acid, hydrochloric acid may be used as halogen acid. It is, however, preferable to use hydrofluoric acid.

The synthetic quartz particles or other glass particles may be treated with halogen acids other than hydrofluoric acid, including hydrochloric acid and hydrobromic acid.

An iodine-based electrolyte prepared by dissolving iodine in a potassium iodide aqueous solution is most conveniently used for the transparent electrolyte 15. However, because this electrolyte is transparent but colored, it is not suited for window glass. Other electrolytes may thus be used.

At present, an electrolyte of the following composition is useful as the transparent electrolyte 15, as in the glass plate for windows of Embodiment 1.
1-Ethyl-3-methylimidazolium iodide: 0.4 M
Tetrabutylammonium iodide: 0.4 M
4-t-butylpyridine: 0.2 M
Guanidium isothiocyanate: 0.1 M

These are prepared as a propylene carbonate solution.

The above electrolytic solution is almost colorless and transparent in the visible light region when the concentration of the I₂, Br₂, or other halogen molecules is 0.0004 mol/l or less.

Other colorless and transparent materials such as acetic acid and citric acid are also usable as transparent electrolytic solutions.

The FTO glass blocks nearly 100% of the light in the wavelength region of 289 nm or less, but lets 65% or more of the light in the 289 nm to 470 nm wavelength region pass. On the other hand, the glass plate for windows of Embodiment 4 blocks nearly 100% of the light in the wavelength region of 470 nm or less. The FTO glass lets 84.3% of the light of 800 nm wavelength pass, that is, blocks 15.7% of 800 nm wavelength light, whereas the glass plate for windows of Embodiment 4 blocks 84.7% of the light of this wavelength.

A solar cell characteristics measurement was performed by irradiating the glass plate for windows of Embodiment 3 with light of 1 kw/m² which is the solar constant over a 1 cm × 1 cm area using a solar simulator. The short-circuit current was 348 µ A, and the open-circuit voltage was 620 mV.

The short-circuit current of 1.7990 mA and open-circuit voltage of 570 mV were obtained when the glass plate for windows was irradiated over a 2 cm × 2 cm area. Contrary to conventional solar cells, the glass plate for windows showed greater photo-generation ability over a larger area.

In case of the synthetic quartz particles having the particle diameter 0.2 mm or less, the short-circuit current of 20 µ A and open-circuit voltage of 417 mV were obtained over a 1 cm × 1 cm area.

Because the titanium dioxide layer 16, the electrolyte 15, and the silicon dioxide layer 20 are all colorless and transparent, the glass plate for windows of Embodiment 4 can be used as a transparent glass plate for windows while serving as a solar cell at the same time.

### Embodiment 5

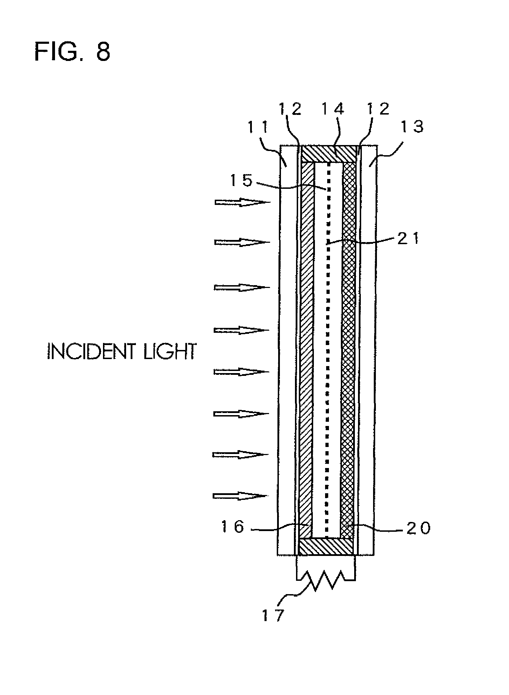

A glass plate for windows of Embodiment 5 is described below with reference to Fig. 8.

Embodiment 5 is an improvement over Embodiment 4, and the common elements and features will not be described.

The silicon dioxide particles used in Embodiment 4 have the particle diameter desirably as small as 500 nm or less, and are dispersed or suspended in the electrolytic solution upon contacting the electrolytic solution after being applied and dried. Because silicon dioxide is a poor conductor, it has the possibility of disturbing the function of the titanium dioxide when the silicon dioxide fine particles dispersed and suspended in the electrolytic solution enter the pores of the porous titanium dioxide.

In order to prevent this, a separating membrane 21 permeable only for the electrolyte is disposed between the silicon dioxide layer 20 and the titanium dioxide layer 16.

### Industrial Applicability

The invention concerning the present application provides a glass plate for windows that includes porous titanium dioxide, resourcefully abundant and inexpensive silicon dioxide, and a colorless transparent electrolyte sealed between two glass plates. The glass plate for windows of the present invention blocks ultraviolet light and infrared light, and lets visible light pass, and is very useful as a window glass plate. Further, by being a solar cell, the glass plate for windows of the present invention is highly effective in solving the energy problems.

The glass plate for windows is very useful in applications where double glazing type glass is used for insulation purposes, for example, such as glass for building exterior, for building interior, for vehicles, for agriculture, for furniture, for electrical products, and for showcases, particularly insulated glazing.

### Description of Reference Numerals and Signs

- 1, 3, 11, 13: Glass substrate
- 2, 12: Transparent conductive layer
- 6, 16: Titanium dioxide layer
- 5, 15: Electrolytic solution
- 4, 14: Sealant
- 7, 17: Load
- 10, 20: Silicon dioxide layer
- 21: Separating membrane

## Claims

1. A glass plate for windows, comprising:
two glass substrates each having a transparent conductive layer formed thereon and disposed face to face each other on the transparent conductive layer sides;
a photovoltaic material disposed on at least one of the glass substrates; and
an electrolyte filled between the two glass substrates,
wherein the transparent conductive layers are connected to an external load.

2. The glass plate for windows of claim 1, wherein the photovoltaic material disposed on one of said glass substrates is titanium dioxide.

3. The glass plate for windows of claim 1, wherein the photovoltaic material disposed on one of said glass substrates is silicon dioxide.

4. The glass plate for windows of claim 1, wherein the photovoltaic material disposed on one of said glass substrates is titanium dioxide, and the photovoltaic material disposed on the other glass substrate is silicon dioxide.

5. The glass plate for windows of claim 4, wherein a separating membrane that allows only the electrolyte to pass is disposed between the silicon dioxide photovoltaic material and the titanium dioxide photovoltaic material.

## Amended claims

### Amended claims under Art. 19.1 PCT

**1.** A glass plate for windows, comprising:
two glass substrates each having a transparent conductive layer formed thereon and disposed face to face each other on the transparent conductive layer sides;
a silicon dioxide photovoltaic material disposed on at least one of the glass substrates; and
an electrolyte filled between the two glass substrates,
wherein the transparent conductive layers are connected to an external load.

**2.** The glass plate for windows of claim 1, wherein a titanium dioxide photovoltaic material is disposed on the other glass substrates.

**5.** The glass plate for windows of claim 2, wherein a separating membrane that allows only the electrolyte to pass is disposed between the silicon dioxide photovoltaic material and the titanium dioxide photovoltaic material.

Statement under Art. 19.1 PCT

- Claim 3 is incorporated into claim 1, and the original claim 3 is cancelled.
- Claim 2 is amended to refer claim 1, and to consist with the expression in claim 5 on the recitation of "photovoltaic material".
- As claims 1 and 2 recites "one of ...", the phrase is amended to "the other ..." claim 2.
- Original claim 4 is same to amended claim 2, and therefore, claim 4 is cancelled.
- In claim 5, dependency is amended so as to be consistent with the above amendments.
